# EUROPÄISCHE PATENTSCHRIFT

(11) **EP 1 354 800 B1**
(45) Veröffentlichungstag und Bekanntmachung des Hinweises auf die Patenterteilung: **31.05.2006**
(21) Anmeldenummer: 02007421.7
(22) Anmeldetag: 28.03.2002
(51) Int. Cl.: B65B 61/20

(54) **Verfahren und Vorrichtungen zum Aufkleben von Trinkhalmen auf Folienbeuteln**
Method and device for bonding drinking straw onto plastic bags
Procédé et dispositif pour appliquer des pailles à des sachet en plastique

(43) Veröffentlichungstag der Anmeldung: 22.10.2003
(60) Teilanmeldung: 04010802.9
(73) Patentinhaber: DEUTSCHE SISI-WERKE GmbH & Co. Betriebs KG, 69009 Heidelberg (DE); PIOFLEX Kunststoff in Form GmbH & Co. OHG, 79208 Denzlingen (DE)
(72) Erfinder: Wild, Hans-Peter Dr., 69214 Eppelheim (DE); Kraft, Eberhard, 74924 Neckarbischofsheim (DE); Hägle, Klaus, 77966 Kappel-Grafenhausen (DE); Willi, Berthold, 79423 Heitersheim (DE)
(74) Vertreter: Grünecker, Kinkeldey, Stockmair & Schwanhäusser Anwaltssozietät

(56) Entgegenhaltungen:
- EP-A- 0 568 293
- EP-A- 0 585 532
- EP-A- 1 095 862
- WO-A-02/06124
- US-A- 4 572 758
- US-A- 5 979 142

## Beschreibung

Die Erfindung beschäftigt sich mit dem Aufbringen von Gegenständen, wie z.B. Trinkhalmen, die in Taschen eingepackt sind, auf Behältnissen wie z.B. Getränkefolienbeuteln.

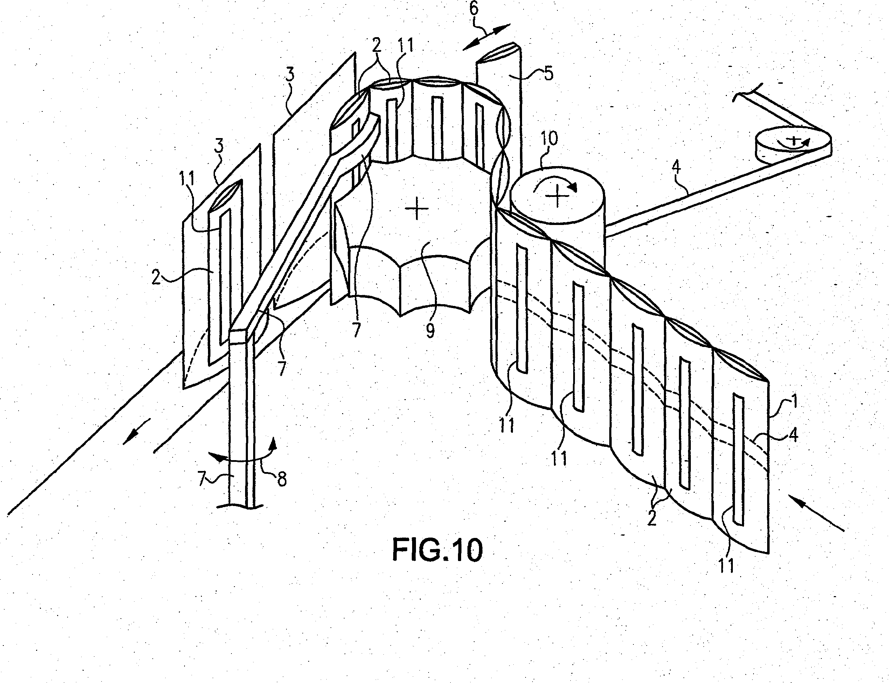

Im Stand der Technik (siehe beispielsweise US 5979142) ist es bekannt, zum Anbringen von Trinkhalmen auf Folienbeuteln so vorzugehen, wie das im folgenden anhand von Fig. 10 erläutert wird. Trinkhalme 11 sind in Folientaschen 2 eingepackt, die ihrerseits zusammenhängen und ein Taschenband 1 bilden. Auf dem Taschenband befindet sich eine Kleberschicht, die mit einem Trägerband 4 (auch Abdeckband oder Liner genannt) abgedeckt ist. Bei einer Umlenkwalze 10 wird das Trägerband 4 abgezogen, so dass die Klebestelle freiliegt. Die einzelnen Halmtaschen 2 werden im weiteren Verlauf durch einen Schneidvorgang eines Messers 5 von dem einlaufenden Taschenband 1 einzeln abgeschnitten. Das Messer kann sich dabei hin- und her bewegen und/oder auch rotieren. Durch entsprechende Einrichtungen, z. B. eine Vakuumöffnung in dem Umlenkstern 9, werden die Taschen 2 auf den Umlenkstern 9 gehalten. Eine Andrückvorrichtung 7, die in Fig. 10 als Hebel ausgestaltet ist, drückt die Tasche 2 mit dem Trinkhalm 11 gegen den Getränkebeutel 3, der an der Vorrichtung zum Aufbringen von Trinkhalmen vorbeitransportiert wird. Auf diese Weise werden Getränkebeutel 3 mit in Taschen 2 eingepackten Trinkhalmen 11 durch Aufkleben der Taschen 2 versehen.

Aufgabe der Erfindung ist es, hier weitere Verbesserungen für einen schnelles und störungsfreies Anbringen vorzuschlagen, insbesondere Verfahren und Vorrichtungen sowie Gegenstände zu schaffen, die eine Verbesserung dieses Verfahrens sowie eine Verbesserung der damit hergestellten Produkte erlauben.

Diese Aufgabe wird gelöst durch ein Verfahren nach Anspruch 1 ein Taschenband nach Anspruch 16 ein Verfahren nach Anspruch 26 und 27, eine Vorrichtung nach Anspruch 32, ein Verfahren nach Anspruch 34, ein Klebeband nach Anspruch 35 sowie einer Vorrichtung nach Anspruch 36.

Vorteilhafte Ausführungsformen der Verfahren, der Vorrichtungen sowie der Gegenstände sind in den abhängigen Ansprüchen offenbart.

Mit Hilfe eines erfindungsgemäßen Klebebandes, das Kleberzonen umfasst, die durch Nichtklebezonen in Richtung entlang des Klebebandes beabstandet sind, ist es möglich, ein erfindungsgemäßes Taschenband herzustellen, bei dem Nichtklebezonen in den Bereichen zwischen den Mitten von zwei benachbarten Taschen ausgebildet sind. Mit einem derartigen erfindungsgemäßen Taschenband ist es möglich, ein erfindungsgemäßes Verfahren durchzuführen, mit dem Taschen auf Behältnisse aufgeklebt werden, bei dem ein Messer, das Taschen des Taschenbandes abschneidet, nicht mit Kleber in Kontakt kommt. Dadurch wird das Verkleben des Messers, was die Standzeit des Messers beeinträchtigen könnte, verhindert.

Für die Erfindung ist es vorteilhaft, wenn ein Kleber mit hoher Anfangsklebkraft verwendet wird. Das erfindungsgemäße Klebeband, das erfindungsgemäße Taschenband und das erfindungsgemäße Behältnis haben alle den Vorteil, dass auch mit einem weichen Kleber gearbeitet werden kann, der eine solche hohe Anfangsklebekraft aufweisen kann. Dadurch, dass eine Abdeckung des Klebers (z.B. eine Tasche oder ein Trägerband) bei dem erfindungsgemäßen Behältnis und auch bei Ausführungsformen des erfindungsgemäßen Taschen- und Klebebandes über die ursprüngliche Kleberzone übersteht, kann ein gewisses Fließen des Klebers in Kauf genommen werden, ohne dass der Kleber nach außen austritt.

Mit dem erfindungsgemäßen Klebeband ist es möglich, vereinzelte Klebestellen auf beliebigen Gegenständen anzubringen. Dies geschieht dadurch, dass der Kleber einer Kleberzone auf dem Gegenstand zusammen mit dem Trägerband angebracht wird. Durch das abdeckende Trägerband ist ein Andrücken möglich. Anschließend, kann das Trägerband leicht entfernt werden. Dies geschieht zum einen dadurch, dass an dem Trägerband, von dem bereits der Kleber auf einen Gegenstand transferiert wurde, gezogen wird und sich das Trägerband so von der zuletzt angeklebten Klebezone löst. Auch wenn des Trägerband durchtrennt wurde, ist es einfach möglich, das Trägerband zu ergreifen und abzuziehen, da es Bereiche gibt, an denen das Trägerband nicht auf dem Gegenstand festklebt. Ein mühseliges Auffinden einer Ecke, an der das Trägerband gegriffen und abgezogen werden kann, wie es von handelsüblichen doppelseitigen Klebebändem bekannt ist, entfällt. Nach Entfernen des Trägerbands verbleibt der Kleber auf dem Gegenstand. Das erfindungsgemäße Klebeband kann also als doppelseitiges Klebeband oder auch als Transferklebeband ausgeführt werden.

Besonders vorteilhafte Ausführungsformen der Vorrichtungen der Verfahren und der Gegenstände werden anhand der beiliegenden Figuren erläutert. Dabei zeigt:
Fig. 1 eine schematische Darstellung eines erfindungsgemäßen Taschenbands,
Fig. 2 verschiedene schematische Darstellungen der erfindungsgemäßen Ausführungsformen von Kleberzonen,
Fig. 3 eine schematische Darstellung eines erfindungsgemäßen Klebebandes,
Fig. 4 eine schematische Darstellung von verschiedenen Zuständen einer Vorrichtung bei der Durchführung eines erfindungsgemäßen Verfahrens,
Fig. 5 eine schematische Darstellung eines erfindungsgemäßen Behältnisses,
Fig. 6 eine schematische Darstellung einer erfindungsgemäßen Vorrichtung zur Herstellung eines erfindungsgemäßen Klebebandes,
Fig. 7 eine schematische Darstellung einer erfindungsgemäßen Vorrichtung zur Herstellung eines erfindungsgemäßen Taschenbandes,
Fig. 8 eine schematische Darstellung einer erfindungsgemäßen Vorrichtung zur Herstellung eines erfindungsgemäßen Taschenbandes,
Fig.9 eine schematische Darstellung einer erfindungsgemäßen Vorrichtung zum Aufkleben eines Taschenbandes
Fig.10 eine Vorrichtung gemäß dem Stand der Technik.

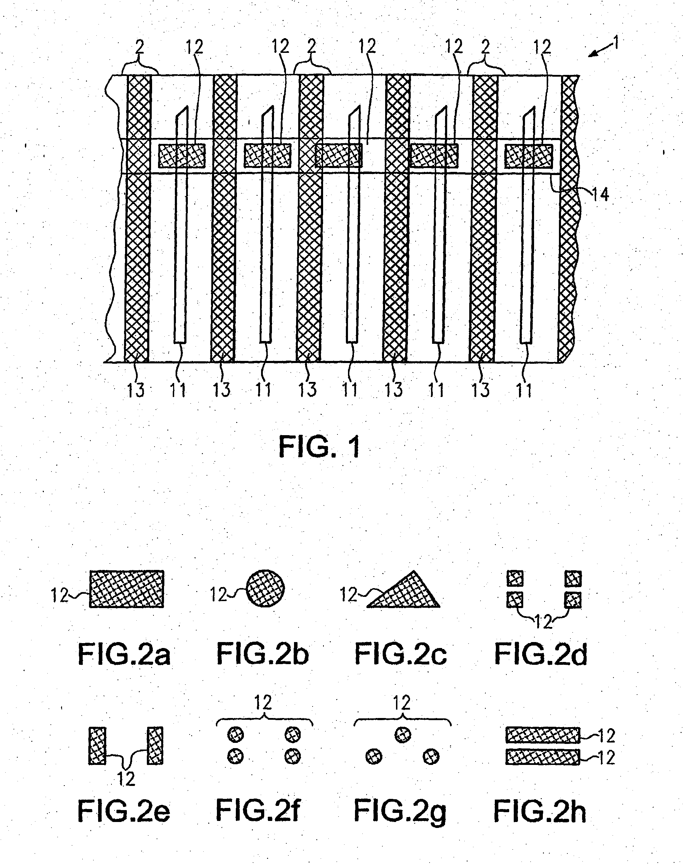

In Fig. 1 ist ein Taschenband 1 gezeigt. Das Taschenband besteht aus einem Folienmaterial und weist parallel zueinander ausgerichtete Taschen 2 auf. Die Taschen 2 des Taschenbandes 1 könnten auch längs hintereinander angeordnet sein.

Jede der Taschen 2 enthält einen oder auch mehrere Trinkhalme 11. Statt Trinkhalmen könnten auch Besteckteile, die beispielsweise aus Kunststoff gefertigt sind Rührwerkzeuge, Zubehörteile oder kleinere Präsente in den Taschen enthalten sein, wobei auch hier jeweils ein oder mehrere derartiger Gegenstände in einer Tasche aufgenommen sein können. Für den Lebensmittelbereich haben die Taschen 2 den Vorteil, dass eine hygienisch saubere Verpackung der Halme 11 oder sonstiger Gegenstände in den Taschen 2 möglich ist.

Die Taschen 2 ergeben sich dadurch, dass in Fig. 1 vor und hinter der Zeichenebene jeweils eine dünne Folienbahn vorgesehen ist, zwischen denen sich der Trinkhalm 11 befindet. Die Folien vor und hinter der Zeichenebene sind in den Bereichen 13 miteinander verschweißt, um so die Trinkhalme 11 voneinander zu separieren. Die Bereiche 13 haben weiterhin die Funktion, dass wenn in den Bereichen 13 eine einzelne Tasche 2 des Taschenbandes 1 abgeschnitten wird, keine Aussenluft an den Trinkhalm 11 gelangen kann, so dass dieser auch nach Abschneiden der Tasche 2 hygienisch sauber bleibt.

Entlang des Taschenbandes 1 sind Kleberzonen 12 vorgesehen. Die Kleberzonen 12 befinden sich in Richtung längs des Taschenbandes 1 im Wesentlichen in der Mitte der jeweiligen Tasche 2. Wie in Fig. 1 dargestellt, sind jedoch leichte Abweichungen der genauen Position der Kleberzonen 12 in Bezug auf die Tasche 2 möglich.

Auch ist es erfindungsgemäß möglich, dass sich, wie in der Mitte der Fig. 1 dargestellt, die Kleberzone 12 bis auf den Bereich 13 links von der mittleren Tasche 2 erstreckt.

Wie in Fig. 1 dargestellt ist für jede Tasche 2 eine Kleberzone 12 vorgesehen. Es können jedoch auch mehrere Kleberzonen 12 für jede Tasche 2 vorgesehen sein. Auch können mehrere Trägerbänder 4 vorgesehen sein.

Die Kleberzonen 12 wiederholen sich im Wesentlichen periodisch entlang dem Taschenband 1. Auch die Ausbildung von Taschen 2 und der Bereiche 13 in den Taschenband 1 wiederholt sich periodisch. Idealerweise ist die Periodizität der Kleberzonen 12 und die Periodizität der Taschen 2 dieselbe.

Das Material, das die Trinkhalme 11 umhüllt, kann jeder geeignete Kunststoff sein oder auch Papier, Gewebe, Folie oder Filmmaterial.

Der Kleber, der in den Kleberzonen 12 aufgebracht ist, kann jeder beliebige geeignete Kleber sein. Vorteilhaft sind Kleber mit einer hohen Anfangsklebekraft. Es können selbst Kleber verwendet werden, die eine gewisse Fließfähigkeit aufweisen, so dass sich eine gute Klebekraft ergibt. Solche Kleber werden auch weiche Kleber genannt. Ein Beispiel für eine verwendbare Klebersorte sind "Hot-Melt"-Kleber.

Die Bereiche 13 in Fig. 1 können sich erfindungsgemäß auch bis ganz an den jeweiligen Trinkhalm 11 heranerstrecken, so dass der überwiegende Teil des Taschenbandes 1 aus Bereichen 13 besteht. Die Klebezone 12 kann sich auch von einem Bereich 13 über den Trinkhalm hinweg bis zu dem benachbarten Bereich 13 erstrecken.

Für das Zerschneiden des Taschenbandes 1 in einzelne Taschen 2 ist es von Vorteil, wenn die Bereiche 13 groß sind, da sich somit ein großer Bereich ergibt, in dem der Schneidvorgang zum Abtrennen einer Tasche 2 von dem Taschenband 1 erfolgen kann.

In Fig. 2 sind erfindungsgemäße Ausgestaltungsformen der Kleberzone 12 dargestellt. Mögliche Formen der Kleberzone 12 sind quadratisch, rechteckig, kreisförmig, dreieckig oder sonstwie regelmäßig oder unregelmäßig geformt. Auch ist es möglich, die Kleberzone 12 in mehrere einzelne Kleberzonen mit den jeweilig vorher genannten Formen aufzuteilen. Dabei kann die Kleberzone 12 in zwei, drei, vier oder mehrere Kleberzonen aufgeteilt werden.

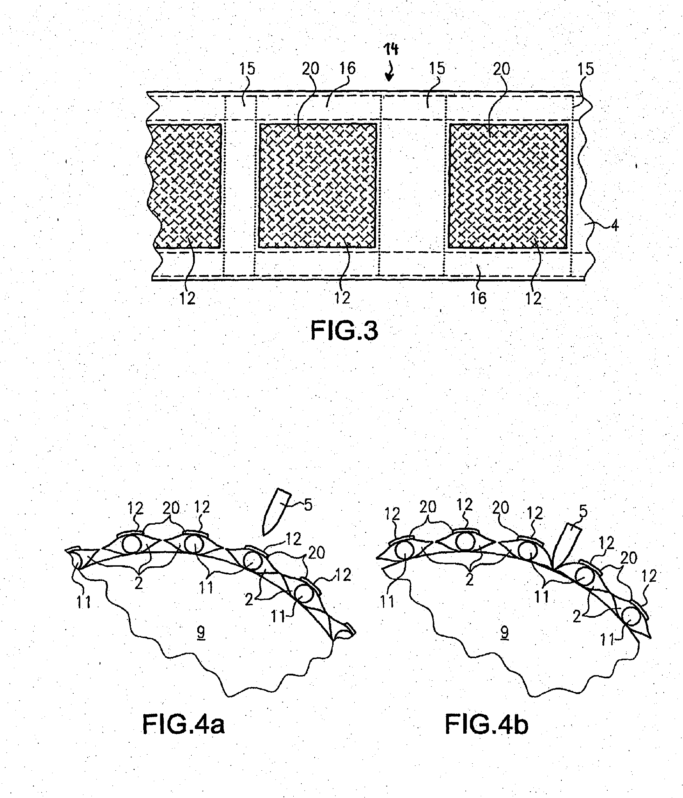

In Fig. 3 ist eine Ausführungsform eines erfindungsgemäßen Klebebandes 14 gezeigt. Ein derartiges Klebeband 14 kann vorteilhaft in dem Taschenband 1, wie in Fig. 1 gezeigt, vorgesehen sein. Auf einem Trägerband 4 sind Kleberzonen 12 vorgesehen. Die verschiedenen Kleberzonen 12 sind durch Nichtklebezonen 15 voneinander beabstandet. Die Nichtklebezonen 15 erstrecken sich bei der dargestellten Ausführungsform quer und zwar vom oberen Rand bis zum unteren Rand des Trägerbandes 4. Durch die Nichtklebezone 15 sind die Kleberzonen 12 entlang des Trägerbandes 4 voneinander beabstandet. Die Nichtklebezonen 15 können durch Fehlen von Kleber 20 ausgebildet sein. Auch ist es erfindungsgemäß möglich, die Nichtklebezonen 15 dadurch auszubilden, dass der Kleber unwirksam gemacht wird, beispielsweise durch Bestrahlung oder Aussetzen des Klebers mit bestimmten Chemikalien, Dämpfen, Gasen, Stäuben etc.. Auch kann Kleber 20 durch eine Schicht abgedeckt werden, um die Nichtklebezone 15 zu schaffen.

Am oberen und unteren Rand des Trägerbandes 4 sind Nichtklebebereiche 16 vorgesehen, die sich entlang des Trägerbandes 4 erstrecken. Dadurch steht das Trägerband 4 in allen Richtungen über den Bereich der klebezone 12 über, wodurch der Kleber ein wenig fließen kann, ohne dass er nach außen austritt.

Wie in Fig. 3 dargestellt, müssen die Größen der Kleberzone 12 und der Nichtklebezone 15 nicht immer identisch sein, sondern sie sollten sich im Wesentlichen ähnlich sein.

Anhand von Fig. 4 und 10 wird eine Ausgestaltungsform des erfindungsgemäßen Verfahrens zum Aufkleben von einer Tasche 2 auf ein Behältnis erläutert. Ein erfindungsgemäßes Taschenband 1, beispielsweise das in Fig. 1 beschriebene Taschenband 1, wird einer, wie in Fig. 10 dargestellten, Vorrichtung zum Aufkleben von Taschen auf Getränkebeutel zugeführt. An einer Umlenkwalze 10 wird das Trägerband 4 entfernt, dadurch das es abgezogen und abtransportiert wird. Die Umlenkwalze 9, wie sie in Fig. 10 dargestellt ist, ist in Fig. 4a und 4b in einer Draufsicht schematisch dargestellt. In Fig. 4a und 4b ist neben der Umlenkwalze 9 das jeweils von rechts einlaufende Taschenband 1 dargestellt. Das Taschenband 1 setzt sich aus nacheinanderfolgenden Taschen 2 zusammen, die jeweils einen Trinkhalm 11 enthalten. Auf der Außenseite des Taschenbandes 1 sind die Kleberzonen 12 dargestellt, in denen sich Kleber 20 auf dem Taschenband 1 befindet. Zu einem Zeitpunkt, wie in Fig. 4a dargestellt, bei dem sich vor dem Messer 5 eine Kleberzone 12 mit Kleber befindet, würde ein Schneidvorgang nicht durchgeführt. Bei dem Zustand in Fig. 4b, bei dem sich vor der Klinge 5 keine Kleberzone 12 befindet, kann das Messer an die Umlenkwalze 9 herangefahren werden, um so mit seiner scharfen vorderen Klinge eine Tasche 2 des Taschenbandes 1 abschneiden. Die Schneidbewegung des Messers wird bei dem Verfahren von einer geeigneten Steuereinrichtung so gesteuert, dass der Schnitt zwischen den Taschenmitten erfolgt. Der Schnitt erfolgt vorteilhafterweise in den Bereichen 13 des Taschenbandes 1. Der Steuereinrichtung wird mechanisch, elektrisch, optisch oder sonst irgendwie die Information zugeführt, wann, in Abhängigkeit von der Position einer Tasche 2 und oder einer Klebezone 12, der Schneidvorgang durchgeführt werden soll. Die Umlenkwalze 9, wie in Fig. 4 dargestellt, kann auch als Umlenkstern, wie in Fig. 10 schematisch dargestellt, ausgebildet werden. Die einzelnen Taschen legen sich dann in die Vertiefungen des Umlenksterns 9. Die Steuerung des Schneidvorgangs, kann auch durch die Drehposition des Umlenksterns bzw. der Umlenkwalze 9 ausgelöst bzw. gesteuert werden.

Die links vom Messer 5 vorhandenen Taschen 2 sind so alle vereinzelt und können durch entsprechende Vorrichtungen, wie beispielsweise eine Vakuumöffnung oder sonstige Klemmvorrichtungen, an der Umlenkwalze 9 gehalten werden.

Dadurch, dass das Messer 5 eine Tasche 2 des Taschenbandes 1 an einer Stelle abtrennt, an der kein Kleber einer Kleberzone 12 vorhanden ist, kommt das Messer 5 nicht mit dem Kleber der Kleberzonen 12 in Berührung. Dadurch kann ein Verkleben des Messers weitgehend ausgeschlossen werden. Ein derartiges Verkleben kann die Standzeit des Messers 5 nachteilig verkürzen bzw. zu Betriebsstörungen führen. Mit dem erfindungsgemäßen Verfahren, unter Verwendung eines erfindungsgemäßen Taschenbandes 1 mit einem erfindungsgemäßen Klebeband 14 kann so die Standzeit des Messers, d. h. die Zeit in der ein Messer ohne Probleme schneidet, beträchtlich erhöht werden.

Nachdem die Taschen 2 vereinzelt sind, werden die Taschen 2 mit einer Andrückvorrichtung 7, wie in Fig. 10 dargestellt, gegen Getränkebeutel 3 gedrückt

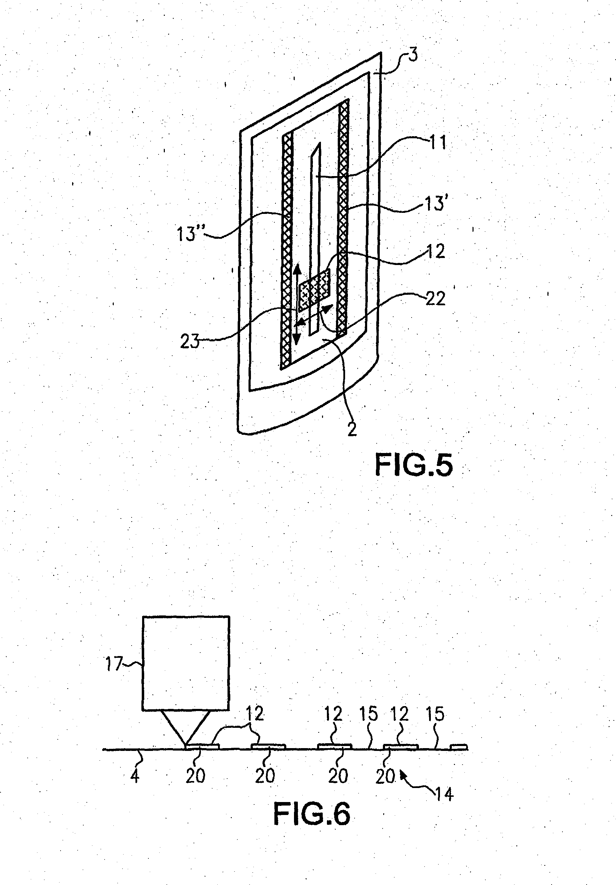

Eine weitere Ausführungsform eines erfindungsgemäßen Verfahrens zum Aufkleben einer Tasche 2 auf einem Behältnis 3 besteht darin, den Kleber 20 mit einem Kopf, wie er z.B. in Fig. 6 dargestellt ist, auf dem Taschenband 1 aufzubringen und anschließend eine Tasche 2 des Taschenbandes 1, wie oben beschrieben, abzuschneiden und die Taschen 2 aufzukleben. Ein Trägerband 4 kann so entfallen. Es kann auch eine Walze 31 eingesetzt werden, auf die der Kleber 20 aufgetragen wird und mit der der Kleber anschließend auf das Taschenband z. B. durch Aufdrücken aufgebracht wird. Die Oberfläche der Walze ist hierbei vorteilhafterweise zumindest teilweise schlecht haftend. Dazu kann die Walze beispielsweise eine mit Silikon, Teflon, Gummi oder einer Antihaftschicht wie z.B. einer Antihaftlackierung beschichtete oder versehene Oberfläche aufweisen. Die Walze wirkt als Transferwalze.

Der Kleber wird vorteilhafterweise gleich in durch Nichtklebezonen 15 beabstandete Kleberzonen 12 auf die Walze 31 aufgetragen und diese Zonen auf das Taschenband 1 übertragen. Die Kleberzonen 12 kommen dabei so auf den Taschen 2 des Taschenbandes 1 zu liegen, dass die Taschen 2 im Bereich der Nichtklebezonen 15 von dem Taschenband 1 im Bereich 13 abgeschnitten werden können. Bei diesem Verfahren wird ein umlaufendes Trägerband 4 sozusagen durch eine Walze ersetzt, wodurch die Zuverlässigkeit verbessert werden kann. Die Ausführungsformen des vorher beschriebenen Verfahrens oder die in den Ansprüchen 2, 5, 6, 8, 10, 11, 14 bis 16 aufgeführten Ausführungsformen sind auch vorteilhafte Ausführungsformen des hier beschriebenen Verfahrens.

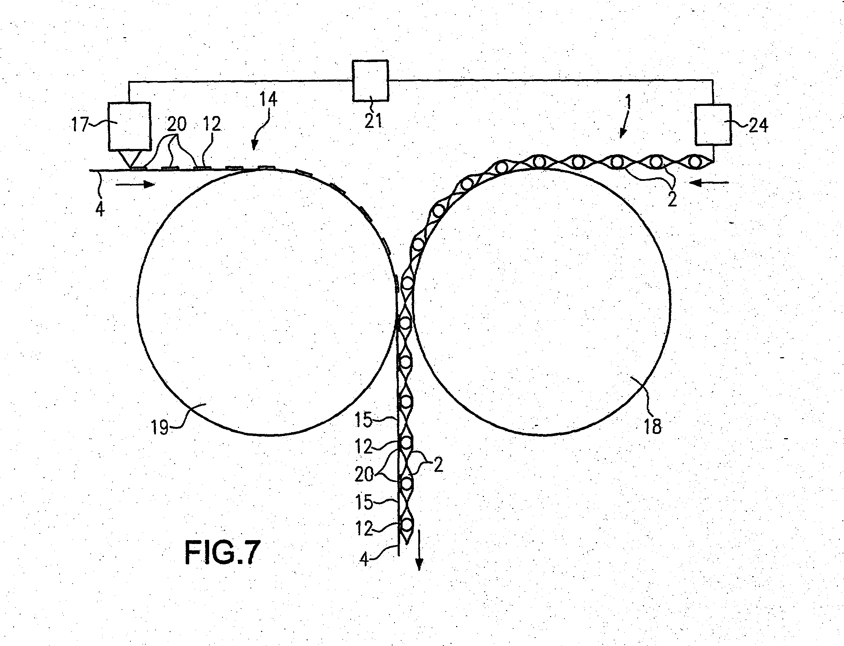

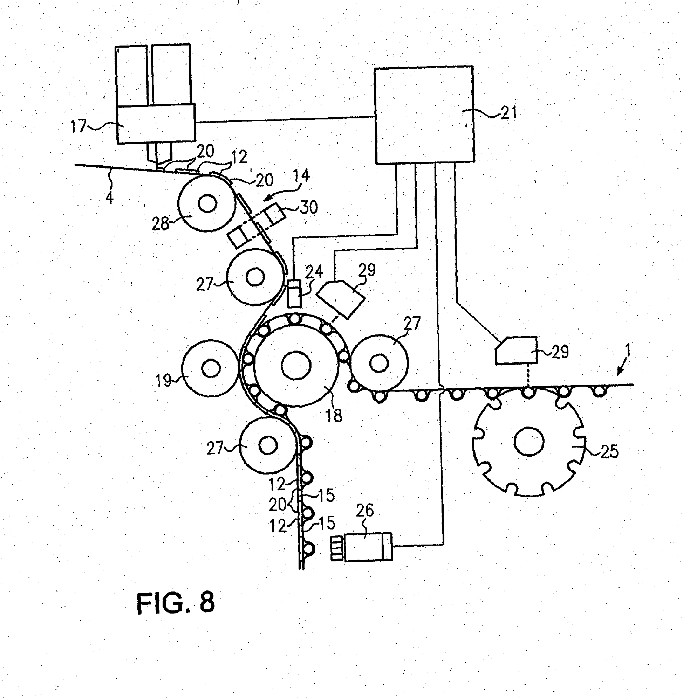

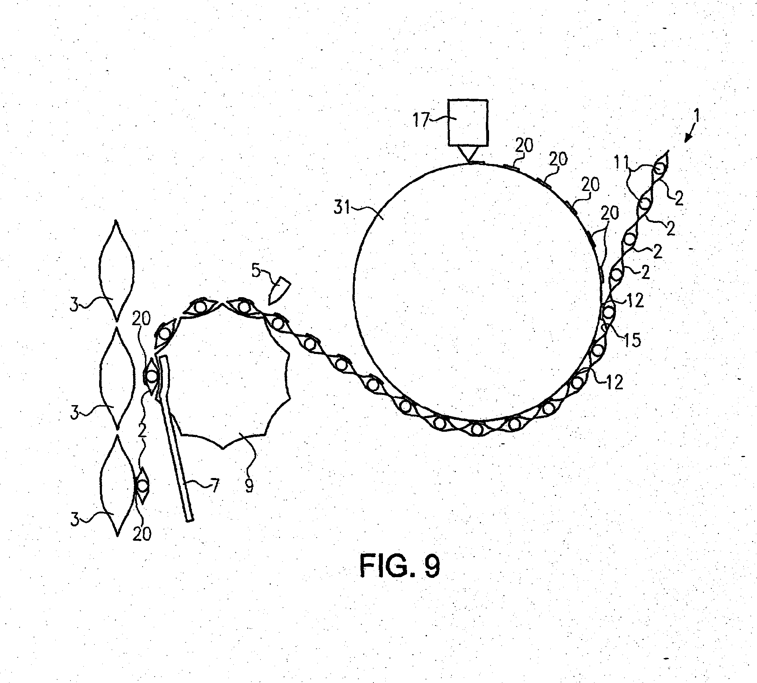

Eine Vorrichtung zur Ausführung des Verfahrens ist in Fig. 9 gezeigt. Ein Kopf 17 ist neben einer Walze 31 angeordnet und kann Kleber 20 intermittierend auf der Walze 31 aufbringen. Ein Taschenband 1 kann an der Walze 31 so vorbeigeführt werden, dass der Kleber 20 von der Walze 31 auf das Taschenband 1 übergeht. Weiterhin ist stromab der Walze 31 eine Schneideinrichtung 5 vorgesehen, um Taschen 2 zu vereinzeln. Die Taschen 2 können mit einer Andrückvorrichtung 7 auf den Behältnissen 3 aufgeklebt werden. Der Kopf 17 kann so angesteuert werden, dass der Kleber 20 so auf dem Taschenband 1 zu liegen kommt, dass Kleberzonen 12 ausgebildet werden, die in etwa in der Mitte einer Tasche 2 liegen. Dadurch können die Taschen 2 im Bereich der Nichtklebezonen 15 von dem Taschenband 1 im Bereich 13 abgeschnitten werden. Die Kleberzonen 12 sind durch Nichtklebezonen 15 beabstandet. Zur Ansteuerung des Kopfs 17 können Steuereinrichtungen 21 und Signal- oder Impulsgeber 23,24,25, wie in Fig. 7,8 gezeigt und weiter unten beschrieben, vorteilhafterweise vorgesehen sein. Auch eine Inspektionskamera wie in Fig. 8 gezeigt ist vorteilhaft einsetzbar.

Das erfindungsgemäße Behältnis ist in Fig. 5 vergrößert dargestellt. Beispielhaft für Trinkgefäße, Flüssigkeitsbehältnisse oder sonstige Verpackungen wird hier nur auf einen Getränkebeutel Bezug genommen. Auf dem Getränkebeutel 3 befindet sich eine Tasche 2, in der ein Strohhalm 11 eingeschlossen ist. Weiterhin ist eine Kleberzone 12 dargestellt, die sich hier mittig in Bezug auf die Richtung quer zu der Tasche, d. h. in Richtung des Doppelpfeils 22 erstreckt. In Bezug auf die Längsrichtung der Tasche 2 kann die Kleberzone 12 an jeder beliebigen Stelle vorgesehen sein. Die bevorzugte Position kann von dem Behältnis abhängen, auf dem die Tasche aufgeklebt werden soll. Bei mit Flüssigkeit gefüllten Folienbeuteln kann eine Position in unteren Bereich zu bevorzugen sein.

Rechts und links des Trinkhalms 11 sind Teile 13' und 13" der Zonen 13 des Taschenbandes 1 zu erkennen. Die Teile 13' und 13 " haben sich durch Abschneiden von Taschen 2 von dem Taschenband 1 vergeben.

Dadurch, dass die Nichtklebebereiche 15, wie in Fig. 3 dargestellt, bei dem Klebeband 14 des Taschenbandes 1 verwendet wurden, erstreckt sich die Kleberzone 12 in Richtung des Doppelpfeils 22 nicht bis an den Rand der Tasche 2. Dadurch und dadurch, dass die Tasche 2 in ihre Längsrichtung länger ist als die Breite des Trägerbandes 4 steht die Tasche 2 in jeder der Richtungen 22 und 23 über die Kleberzone 12 über. Ohne die Nichtklebezone 15 würde sich, wie im Stand der Technik, die Kleberzone 12 bis an die seitlichen Ränder der Tasche 2 in Richtung des Doppelpfeils 22 erstrecken.

Dadurch, dass die Tasche 2 in jeder der Richtungen 22 und 23 über die Kleberzone 12 übersteht, kann auch ein weicher Kleber 20 verwendet werden, der auch geringfügig fließen kann, ohne dass der Kleber seitlich zwischen der Tasche 2 und dem Folienbeutel heraustritt. Dadurch kann ein Kleber verwendet werden, mit dem ein wesentlich höher Tack-Wert, d. h. eine höhere Anfangsklebekraft erreicht wird.

Eine erfindungsgemäße Vorrichtung zur Herstellung eines erfindungsgemäßen Klebebandes 14 ist in Fig. 6 gezeigt. Ein Kopf 17 ist vorgesehen, um Kleber 20 portionsweise auf ein Trägerband 4 abzugeben. Die erfindungsgemäße Vorrichtung zur Herstellung eines erfindungsgemäßen Klebebandes 14 umfasst weiterhin eine Einrichtung, die das Trägerband 4 zuführt. Dies kann beispielsweise eine Abwickeleinrichtung sein Weiterhin umfasst die erfindungsgemäße Vorrichtung Mittel zum Transportieren des Trägerbandes 4 unter dem Kopf 17 hinweg. Diese Mittel sind in Fig. 6 nicht dargestellt.

Durch Walzen oder sonstige Umlenkvorrichtungen kann vorteilhafterweise erreicht werden, dass das Trägerband 4 Kontakt mit dem Kopf 17 hat. Der Kontakt kann sehr leicht sein.

Auch ist es erfindungsgemäß möglich, dass das Trägerband 4 von dem Kopf 17 beabstandet ist und der Kleber über eine gewisse Entfernung hinweg aufgetragen z.B. aufgesprüht wird.

Ein erfindungsgemäßes Verfahren zur Herstellung des erfindungsgemäßen Klebebandes 14 wird anhand von Fig. 6 erläutert. Eine nicht dargestellte Einrichtung zum Liefern von Trägerband 4 liefert von links in Fig. 6 einlaufend das Trägerband 4. Das Trägerband 4 kann beispielsweise von einer Rolle abgewickelt werden.

Während das Trägerband 4 an dem Kopf 17 vorbeiläuft, wird durch den Kopf 17 intermittierend Kleber 20 ausgegeben und auf das Trägerband 4 aufgebracht. Dadurch ergeben sich Kleberzonen 12 nicht Nichtklebezonen 15.

Nach Auftragen des Klebers 20 in den Kleberzonen 12 auf das Trägerband 4 läuft das so hergestellte Klebeband 14 nach rechts aus Fig. 6 aus. Es kann anschließend unmittelbar weiter verwendet werden, beispielsweise bei der Herstellung eines erfindungsgemäßen Taschenbandes 1 oder es kann aufgerollt werden. Wird das erfindungsgemäße Klebeband 14 aufgerollt, so ist es vorteilhaft, wenn ein Trägerband 4 verwendet wird, das auf beiden Seiten schlecht haftend ist. Vorteilhaft ist es weiterhin, wenn eine Seite deutlich schlechter haftend ist als die andere, damit bei Abrollen des aufgerollten erfindungsgemäßen Klebebandes 14 der Kleber 20 in den Kleberzonen 12 immer auf einer Seite des Trägerbandes 4 verbleibt.

Wird das erfindungsgemäß hergestellte erfindungsgemäße Klebeband 14 gleich weiterverwendet, so ist es ausreichend, wenn das Trägerband 4 lediglich auf einer Seite schlecht haftend ist.

Die erforderliche schlechte Haftung kann beispielsweise durch ein beschichtetes Trägerbandmaterial erreicht werden. Besonders vorteilhaft sind silikonisierte Trägerbänder 4. Es können auch Teflon, oder andere Antihaftbeschichtungen wie z. B. Antihaftlackierungen verwendet werden. Auch können Trägerbänder verwendet werden, die insgesamt aus einem Material mit einer schlechten Haftung bestehen.

Bei der Herstellung des erfindungsgemäßen Klebebandes 14 ist es möglich, mit mehreren Köpfen oder mit mehreren Kleberauftragelementen parallel nebeneinander auf einem von einer Mutterrolle ablaufenden Trägerbandmaterial Kleberzonen 12 mit Kleber zu versehen. Danach wird das Trägerbandmaterial in einzelne Trägerbänder 4 zerschnitten. Es ist erfindungsgemäß auch möglich, erst aus einer Mutterrolle einzelne Trägerbänder 4 zu fertigen und diese dann mit dem Kleber 20 in den Klebezonen 12 zu versehen.

Eine erfindungsgemäße Vorrichtung zur Herstellung eines erfindungsgemäßen Taschenbandes 1 ist in Fig. 7 gezeigt. Walzen 18 und 19, die verschieden oder gleichgroß sein können, sind vorgesehen, um zwischen sich ein einlaufendes Taschenband 1 und ein Trägerband 4 aufzunehmen und gegeneinander zu drücken. Weiterhin ist eine Einrichtung 17 ähnlich wie in Fig. 6 vorgesehen, um Kleber 20 in Kleberzonen 12 auf den Trägerband 4 aufzubringen. Die erfindungsgemäße Vorrichtung zum Herstellen eines erfindungsgemäßen Taschenbandes 1 muss so ausgestaltet sein, dass die Kleberzonen 12 im Wesentlichen in der Mitte in der Richtung längs des Taschenbandes 1 auf eine Tasche 2 treffen. Insbesondere ist es vorteilhaft, wenn die Nichtkleberzonen 15 zwischen den Kleberzonen 12 auf diejenigen Teile der Taschen 2 treffen, die zu den Bereichen 13 (siehe Fig. 1) gehören, in denen die Taschen 2 später von dem Taschenband 1 abgeschnitten werden können.

Bei der in Fig. 7 schematisch dargestellten Vorrichtung wird dies dadurch erreicht, dass eine Steuereinrichtung 21 vorgesehen ist, die mit einem Signalgeber 24 und dem Kopf 17 verbunden ist. Der Signalgeber 24 kann eine bestimmte Position einer Tasche 2 erfassen. Der Signalgeber 24 kann mechanisch, elektronisch, optisch oder sonstwie ausgestaltet sein. Ein Nutenrad, in dass sich die Trinkhalme 11 einlegen kann vorteilhaft für die Ausbildung eines Signalgebers vorgesehen sein. Der Signalgeber 24 signalisiert an die Steuereinrichtung 21 beispielsweise den Beginn, die Mitte oder das Ende einer Tasche 2 oder eines Trinkhalms 11 in der Tasche 2. Die Steuereinrichtung 21 kann dann dem Kopf 17 signalisieren Kleber 20 aufzutragen. Dadurch ist es möglich, die Kleberzonen 12 und die Nichtklebezonen 15 genau auf die jeweilige Tasche 2 des Taschenbandes 1 anzupassen.

Erfindungsgemäß ist es jedoch auch möglich, den Kleberauftrag 20 durch den Kopf 17 zeitlich zu takten, wobei der Takt von der Geschwindigkeit des Trägerbandes 4 oder des Taschenbandes 1 abhängig gemacht werden kann.

Die Menge an pro Klebezone 12 ausgebrachtem Kleber 20 ist vorteilhafterweise voreingestellt.

Anstatt 2 Umlenkwalzen 18 und 19 zu verwenden, um das Trägerband 4 und das Taschenband 1 zu verbinden, ist es auch möglich nur eine Walze zum Umlenken entweder des Trägerbandes 4 oder des Taschenbandes 1 zu verwenden oder auch gar keine Walze zu verwenden und das Zusammenführen des Taschenbandes 1 und des Trägerbandes 4 dadurch zu erreichen, dass eine Engstelle vorgesehen ist, durch die die beiden Bänder 1 und 4 hindurchgezogen werden.

Eine weitere Ausführungsform einer erfindungsgemäßen Vorrichtung zur Herstellung eines erfindungsgemäßen Taschenbandes 1 ergibt sich dadurch, dass der Kopf 17 den Kleber nicht auf das Trägerband 4 aufträgt, sondem so angeordnet ist, dass der Kleber 20 auf das Taschenband 1 aufgebracht wird. Das Abdecken der Kleberzonen 12 mit dem Trägerband 4 erfolgt jedoch analog zu der oben beschriebenen Vorrichtung. Auch hier kann der Kleberauftrag durch den Kopf 17 durch das Vorbeilaufen einzelner Taschen oder Tascheninhalte ausgelöst werden oder auch zeitlich getaktet sein, wobei der Takt von der Geschwindigkeit des Träger- oder des Taschenbandes 1 abhängt.

Fig. 8 zeigt ebenfalls eine erfindungsgemäße Vorrichtung zum Herstellen eines erfindungsgemäßen Taschenbandes 1. Ein Kopf 17 ist vorgesehen um Kleber 20 auf ein Trägerband 4 abzugeben. Das Trägerband 4 wird durch Umlenkwalzen 28 geführt bzw transportiert. Einrichtungen zum Spannen des Trägerbandes 4 können ebenfalls vorgesehen sein. Die Vorrichtung umfasst weiterhin eine oder mehrere Umlenkwalzen 27 für die Führung eines Taschenbandes 1. Walzen 18 und 19 sind vorgesehen, um das Trägerband 4 und das Taschenband 1 zusammenzuführen und so mit dem Kleber miteinander zu verkleben. Durch die Walzen 18 und 19 werden die beiden Bänder gegeneinander gedrückt.

Weiterhin ist ein Nutenrad 25 vorgesehen, wobei die Trinkhalme 11 des Taschenbandes 1 in den Nuten aufgenommen werden können. Dadurch ist eine Zuführung von Trinkhalmen möglich, bei der der Abstand benachbarter Trinkhalme und/oder die Raten bzw. der Takt, mit dem die Trinkhalme 11 bzw. die Taschen 2 zugeführt werden, eingestellt werden können. Auch ist es alternativ oder zusätzlich möglich, dass das Nutenrad 25 als Impulsgeber funktioniert, wobei ein durchlaufender Trinkhalm 11 einen Impuls auslöst.

Eine Prüfeinrichtung 30 zum Prüfen des Trägerbandes ist stromab von dem Kopf 17 vorgesehen. Die Prüfeinrichtung 30 kann beispielsweise dazu vorgesehen sein, einfach nur das Vorhandensein und /oder die laterale Position des Trägerbandes 4 bzw. Klebebades 14 zu prüfen. Auch kann sie Eigenschaften des Klebebandes 14, wie z.B. die Größe und/oder Beschaffenheit bzw. das Vorhandensein von Kleberzonen 12 auf dem Trägerband 4 zu prüfen. Die Prüfeinrichtung 30 kann vorteilhafterweise auch mit der Steuereinrichtung 21 verbunden sein und so bei festgestellten Fehlern je nach Fehler angemessene Maßnahmen wie Abschalten, Warnen, Nachstellen von Walzen einer Spannvorrichtung, von anderen Walzen oder vom Kopf 17 oder ähnliches auslösen

Weiterhin ist eine Steuerungseinrichtung 21 vorgesehen, die mit einem oder mehreren Impulsgebern und dem Kopf 17 verbunden ist. Die Steuerungseinrichtung 21 kann den Kopf so ansteuern, dass dieser gezielt Kleber 20 auf das Trägerband 4 aufbringt. Einrichtungen 29 zur Führung des Taschenbandes 1 sind an geeigneten Positionen vorgesehen.

Ein Impulsgeber 24 ist bei der Walze 18 vorgesehen und dazu ausgebildet, vorbeilaufende Trinkhalme zu erkennen. Zum Erkennen eines Trinkhalms kann der Impulsgeber 24 beispielsweise optisch, mechanisch elektronisch oder sonstartig ausgebildet sein. Er ist mit der Steuereinrichtung 21 verbunden und kann dieser Steuerimpulse zuleiten.

Eine Inspektionskamera 26, die mit der Steuereinrichtung 21 verbunden ist, ist vorgesehen, um Bilder des fertig hergestellten Taschenbandes 1 aufzunehmen. Aus den Bildern können beispielsweise in der Steuereinrichtung 21 verschiedene Parameter durch geeignete Bildbearbeitungs- und Bildauswertungssoftware bestimmt werden. Dazu gehören vorteilhafterweise die Größe der Nichtklebezone 15, die Größe der Kleberzone 12, die korrekte Position der Kleberzone 12 in Bezug auf den Trinkhalm 11 und ein korrekter Abstand zwischen den Kleberzonen 12.

Die Inspektionskamera 26 kann zu Kontroll- oder auch Steuerzwecken eingesetzt werden. Beispielsweise ist es durch die Inspektionskamera 26 möglich, die relative Position der Kleberzone 12 in Bezug auf eine Tasche 2 des Taschenbandes 1 während des Betriebs zu kontrollieren und so eventuell den Klebeauftrag durch den Kopf 17 zeitlich nachzujustieren, d. h. im Vergleich zu vorher etwas zu verzögern oder etwas zu verfrühen.

Bei der Vorrichtung in Figur 8 ist es erfindungsgemäße auch möglich, dass der Kopf 17 den Kleber 20 in Kleberzonen 12 auf das Taschenband 1 aufbringt.

Im Folgenden werden erfindungsgemäße Verfahren zum Herstellen eines erfindungsgemäßen Taschenbandes 1 erläutert. Bei den beiden Verfahren wird ein Trägerband 4 und ein Taschenband 1 zugefördert. Das Taschenband 1 kann beispielsweise aus einem Vorratsbehälter herausgezogen werden oder von einer Walze abgerollt werden. Das Trägerband 4 kann ebenfalls beispielsweise von einer Spule abgerollt werden. Bei beiden Verfahren werden weiterhin das Trägerband 4 und das Taschenband 1 durch entsprechende Einrichtungen 18 und 19 miteinander in Kontakt gebracht. Ein Signalgeber 23,24,25 detektiert das Vorbeilaufen eines bestimmten Teils des Taschenbandes 1 an die Steuerungseinrichtung 21. Die Steuerungseinrichtung 21 steuert daraufhin den Kopf 17 so an, dass er Kleber 20 in Kleberzonen 12 ausgibt. Bei einem erfindungsgemäßen Verfahren kann der Kleber auf das Trägerband 4 ausgegeben werden, bei einem anderen erfindungsgemäßen Verfahren kann der Kleber auf das Taschenband 1 ausgegeben werden. Wird der Kleber auf das Taschenband 1 aufgebracht, so wird er durch die Steuerungseinrichtung 21 so aufgebracht, dass er in Richtung längs des Taschenbandes 1 im Wesentlichen in der Mitte auf jeder Tasche 2 aufgebracht wird. Die klebefreien Zonen 15 liegen im Wesentlichen in dem Bereich der in Fig. 1 mit 13 gekennzeichnet ist, d. h. in dem Bereich, in dem eine Tasche 2 von dem Taschenband 1 abgeschnitten werden kann.

Wird der Kleber durch den Kopf 17 auf das Trägerband 4 aufgebracht, so findet der Kleberauftrag in den Kleberzonen 12 so statt, dass bei dem Zusammenfügen des Trägerbandes 4 mit dem Taschenband 1 die Kleberzonen 12 im Wesentlichen in Längsrichtung des Taschenbandes 1 mittig in Bezug auf die jeweiligen Taschen 2 zum liegen kommen. Die Nichtklebezonen 15 kommen im Wesentlichen in den Bereichen 13 des Taschenbandes 1 zum liegen. Die Steuerung des Kopfes 17 für den Auftrag des Klebers 20 in Kleberzonen 12 kann auch durch Vorgabe eines zeitlichen Taktes erfolgen, wobei der Takt von der Geschwindigkeit des Trägerbandes 4 oder des Taschenbandes 1 abhängt.

Das so hergestellte erfindungsgemäße Taschenband 1 kann anschließend mit einer Inspektionskamera 26, wie oben beschrieben, inspiziert werden.

Das so hergestellte erfindungsgemäße Taschenband 1 kann anschließend aufgerollt oder in einer Verpackung lose aufeinandergelegt werden. Auch ist es möglich, dass so hergestellte Taschenband 1 gleich mit einer Vorrichtung, wie sie in Fig. 4 und Fig. 10 dargestellt ist, zu verwenden. In diesem Fall ist es möglich, dass in Fig. 10 dargestellte entfernte, d. h. über die Umlenkwalze 10 abgezogene Trägerband 4 der Vorrichtung, wie sie in Fig. 7 dargestellt ist, links wieder zuzuführen und so eine geschlossenen Kreislauf des Trägerbands 4 zu erreichen. Auch ist es möglich das abgezogene Trägerband 4 aufzuwickeln und wieder zur Herstellung von erfindungsgemäßen Klebeband 14 oder Taschenband 1 einzusetzen.

## Patentansprüche

1. Verfahren zum Aufkleben mindestens einer Tasche (2), insbesondere einer Folientasche (2), auf die Außenseite eines Behältnisses (3), insbesondere Getränkebeutels (3), mit folgenden Schritten:
von einem Taschenband (1) wird ein Trägerband (4) (Liner), das Kleber (20) zwischen dem Taschenband (1) und dem Trägerband (4) abdeckt, entfernt, wobei der Kleber (20) auf dem Taschenband (1) verbleibt,
- dann wird mit einem Schneidvorgang (6) mindestens eine Tasche (2) von dem Taschenband (1) abgeschnitten, und
- die Tasche (2) mit dem Kleber (20) auf das Behältnis (3) geklebt, wobei
der Kleber (20) zwischen dem Taschenband (1) und dem Trägerband (4) in entlang des trägerbandes (4) voneinander durch Nichtklebezonen, (15) beabstandete Kleberzonen (12) vorgesehen ist,
Nichtklebebereiche (16) die sich entlang des Trägerbandes (4) erstrecken am oberen und unteren Rand des Trägerbandes (4) vorgesehen sind, und
der Schneidvorgang (6) so getätigt wird, dass der Schnitt in einer Nichtklebezone (15) erfolgt.

2. Verfahren nach Anspruch 1, **dadurch gekennzeichnet, dass** die Kleberzonen (12) und die Nichtklebezonen (15) in vorbestimmten Bereichen relativ zu den Taschen (2) des Taschenbandes (1) vorgesehen sind.

3. Verfahren nach Anspruch 1 oder 2, **dadurch gekennzeichnet, dass** ein Trägerband (4) aus Kunststoff, Papier, Folie, Gewebe, Verbundwerkstoff, Metall, Gummi, synthetischem Gummi, Keilriemen- oder Zahnriemenmaterial oder Filmmaterial verwendet wird

4. Verfahren nach einem der Ansprüche 1 bis 3, **dadurch gekennzeichnet, dass** ein Trägerband (4) verwendet wird, das zumindest auf einer Seite schlecht haftend beispielsweise beschichtet oder silikonisiert oder mit Teflon oder einer Antihaftlackierung o.ä. versehen ist.

5. Verfahren nach einem der Ansprüche 1 bis 4, **dadurch gekennzeichnet, dass** ein Kleber mit einer hohen Anfangsklebekraft beispielsweise ein weicher Kleber (20); vorzugsweise ein Hot-Melt-Kleber (20) verwendet wird.

6. Verfahren nach einem der Ansprüche 1 bis 5, **dadurch gekennzeichnet, dass** der Schneidvorgang mit einer Klinge (5) und/oder einem Messer (5) erfolgt, das sich hin- und herbewegt und/oder rotiert.

7. Verfahren nach einem der Ansprüche 1 bis 6, **dadurch gekennzeichnet, dass** sich die Nichtklebezonen (15) quer zu dem Trägerband (4) erstrecken.

8. Verfahren nach einem der Ansprüche 1 bis 7, **dadurch gekennzeichnet, dass** die Nichtklebezonen (15) durch Fehlen, Unwirksammachung oder Abdeckung von Kleber (20) ausgebildet sind.

9. Verfahren nach einem der Ansprüche 1 bis 8, **dadurch gekennzeichnet, dass** der Schneidvorgang zwischen den Tascheninhalten (11) erfolgt.

10. Verfahren nach einem der Ansprüche 1 bis 9, **dadurch gekennzeichnet, dass** die Tasche (2) mit mehreren Kleberzonen (12) an dem Behältnis (3) aufgeklebt wird und/oder mehrere Trägerbänder (4) verwendet werden.

11. Verfahren nach einem der Ansprüche 1 bis 10, **dadurch gekennzeichnet, dass** das Taschenband (1) mit dem Trägerband (4) und dem Kleber (20) unmittelbar vor dem Entfernen des Trägerbandes (4) hergestellt wird.

12. Verfahren nach Anspruch 11, **dadurch gekennzeichnet, dass** das Trägerband (4) ein geschlossenes umlaufendes Band ist.

13. Verfahren nach einem der Ansprüche 1 bis 12, **dadurch gekennzeichnet, dass** die Taschen (2) des verwendeten Taschenbandes (1) einen Trinkhalm (11) und/oder ein Besteckstück und/oder ein Rührwerkzeug und/oder ein Zubehörteil und/oder ein kleines Präsent umfassen.

14. Verfahren nach einem der Ansprüche 1 bis 13, **dadurch gekennzeichnet, dass** ein Taschenband (1) verwendet wird, bei dem die Kleberzonen (12) in Richtung längs Taschenbandes (1) im Wesentlichen mittig in Bezug auf die Taschen (2) vorgesehen sind.

15. Verfahren nach einem der Anspruche 1 bis 14, **dadurch gekennzeichnet, dass** das Behältnis (3) ein Trinkgefäß (3), ein Flüssigkeitsbehältnis (3) oder eine Verpackung (3) ist.

16. Taschenband (1), mit kleber (20) und einem Trägerband (4), das den Kleber (20) abdeckt, wobei
- in Richtung entlang des Trägerbandes Kleberzonen (12) durch Nichtklebezonen (15) beabstandet, sind, und
- Nichtklebebereiche (16) die sich entlang des Trägerbandes (4) erstrecken am oberen und unteren Rand des Trägerbandes (4) vorgesehen sind.

17. Täschenband (1) nach Anspruch 16, **dadurch gekennzeichnet, dass** Kleberzonen (12) und Nichtklebezonen (15) in vorbestimmten Bereichen relativ zu den Taschen (2) des Taschenbandes (1) vorgesehen sind.

18. Taschenband (1) nach Anspruch 16, oder 17,- **dadurch gekennzeichnet, dass** das Trägerband (4) aus Kunststoff, Papier, Folie, Gewebe oder Filmmaterial hergestellt ist.

19. Taschenband (1) nach einem der Ansprüche 16 bis 18, **dadurch gekennzeichnet, dass** das Trägerband (4) zumindest einseitig schlecht haftend, z. B. beschichtet, insbesondere silikonisiert oder mit Teflon beschichtet oder versehen ist.

20. Taschenband (1) nach einem der Ansprüche 16 bis 19, **dadurch gekennzeichnet, dass** der Kleber (20) ein Kleber mit einer hohen Anfangsklebekraft, beispielsweise ein weicher Kleber (20) vorzugsweise ein Hot-Melt-Kleber (20) ist.

21. Taschenband (1) nach einem der Ansprüche 16 bis 20, **dadurch gekennzeichnet, dass** Nichtklebezonen (15) durch Fehlen oder Unwirksammachung oder Abdeckung von Kleber (20) vorgesehen sind.

22. Taschenband (1) nach einem der Ansprüche 16 bis 21, **dadurch gekennzeichnet,** das sich die Nichtklebezonen (15) quer zu dem Trägerband (4) erstrecken.

23. Taschenband (1) nach einem der Ansprüche 16 bis 22, **dadurch gekennzeichnet, dass** mehrere Trägerbänder (4) vorgesehen sind.

24. Taschenband (1) nach einem der Ansprüche 16 bis 23, **dadurch gekennzeichnet, dass** in der Tasche (2) ein Trinkhalm (11) und/oder ein Besteckteil und/oder ein Rührwerkzeug und/oder ein Zubehörteil und/oder ein kleines Präsent umfasst ist.

25. Taschenband (1) nach einem der Ansprüche 16 bis 24, **dadurch gekennzeichnet, dass** Nichtklebezonen (15) in Richtung längs des Taschenbandes (1) im Wesentlichen mittig in Bezug auf die jeweilige Tasche (2) vorgesehen sind.

26. Verfahren zur Herstellung eines Taschenbandes (1) mit Kleber (20) und einem Trägerband (4), das den Kleber (20) abdeckt, mit den Schritten:
- der Kleber (20) wird auf das Trägerband (4) aufgebracht, und
- das Taschenband (1) wird mit dem Trägerband (4) verbunden, wobei
der Kleber intermittierend auf dem Trägerband (4) in Kleberzonen (12), die durch Nichtklebezonen (15) in Richtung entlang des Trägerbands (4) beabstandet sind, aufgebracht wird,
Nichtklebebereiche (16) die sich entlang des Trägerbandes (4) erstrecken am oberen und unteren Rand des Trägerbandes (4) vorgesehen und wobei
das Taschenband (1) mit dem Trägerband (4) so verbunden wird, dass sich die Klebezonen (12) in einer vorbestimmten Position relativ zu den Taschen (2) des Taschenbandes (1) befinden.

27. Verfahren zur Herstellung eines Taschenbandes (1) mit Kleber (20) und einem Trägerband (4), das den Kleber (20) abdeckt, mit den Schritten:
- der Kleber (20) wird auf das Taschenband (1) aufgebracht, und
- das Taschenband (1) wird mit dem Trägerband (4) verbunden, wobei
der Kleber intermittierend auf dem Taschenband (4) in Kleberzonen (12), die durch Nichtklebezonen (15) in Richtung entlang des Taschenbands (1) beabstandet sind aufgebracht wird,
Nichtklebebereiche (16) die sich entlang des Trägerbandes (4) erstrecken am oberen und unteren Rand des Trägerbandes (4) vorgesehen sind und
sich die Kleberzonen (12) in einer vorbestimmten Position relativ zu den Taschen (2) des Taschenbandes (1) befinden.

28. Verfahren nach Anspruch 26 oder 27, **dadurch gekennzeichnet, dass** eine Tasche (2) des Taschenbandes (1) ein Signal auslöst, dass das Auftragen des Klebers (20) auf das Trägerband (4) und /oder das Taschenband steuert.

29. Verfahren nach einem der Ansprüche 26 bis 28, **dadurch gekennzeichnet, dass** über vorbestimmte Zeiten und/oder Zonen auf dem Trägerband (4) und /oder Taschenband (1) und/oder Mengen an Kleber (20), Kleber (20) aufgebracht wird.

30. Verfahren nach einem der Ansprüche 26 bis 29, **dadurch gekennzeichnet, dass** die Kleberzonen (12) im Wesentlichen periodisch wiederholend auf dem Trägerband (4) und /oder Taschenband (1) aufgebracht werden.

31. Verfahren nach einem der Ansprüche 26 bis 30; **dadurch gekennzeichnet, dass** die Kleberzonen (12) in Richtung längs zu dem Täschenband (1) im Wesentlichen mittig in Bezug auf die jeweilige Tasche (2) vorgesehen werden.

32. Vorrichtung zur Herstellung eines Taschenbandes (1) mit Kleber (20) und einem Trägerband (4), das den Kleber (20) abdeckt, mit:
- einer Einrichtung zum Liefern eines Trägerbands (4),
- einer Einrichtung zum Fördern eines Taschenbands (1),
wobei das Taschenband (1) und/oder das Trägerband (4) mit Kleber (20) versehen sein können,
- einer Einrichtung zum Zusammenfügen des Taschenbandes (1) und des Trägerbandes (4), so dass der Kleber (20) zwischen dem Taschenband (1) und dem Trägerband (4) vorgesehen ist, wobei
die Vorrichtung eine Steuereinrichtung (21) umfasst, mit der in Richtung entlang des Taschenbandes (1) durch Nichtklebezonen (15) beabstandete Kleberzonen (12) auf vorbestimmte Bereiche der Taschen (2) des Taschenbandes (1) aufgebracht werden können, wobei
Nichtklebebereiche (16) die sich entlang des Trägerbandes erstrecken am oberen und unteren Rand des Trägerbandes (4) vorgesehen sind.

33. Vorrichtung nach Anspruch 32, **dadurch gekennzeichnet, dass** ein Signalgeber (24) vorgesehen ist, der eine bestimmte Position einer Tasche (2) des Taschenbandes (1) ermitteln und daraufhin ein Signal an die Steuereinrichtung (21) geben kann

34. Verfahren zur Herstellung eines Klebebandes (14), bei dem auf wenigstens einer Seite eines Trägerbandes (4) Kleber (20) vorgesehen ist, wobei
der Kleber (20) auf das Trägerband (4) in entlang des Trägerbandes (4) voneinander durch Nichtklebezonen (15) beabstandete Klebezonen (12) intermittierend aufgebracht wird und
Nichtktebebereiche (16) die sich entlang des Trägerbandes (4) erstrecken am oberen und unteren Rand des Trägerbandes (4) vorgeshen sind.

35. Klebeband (14) mit einem Trägerband (4) und einem Kleber (20), wobei
der Kleber (20) auf dem Trägerband (4) in entlang des Trägerbandes (4) voneinander durch Nichtklebezonen (15) beabstandete Klebezonen (12) vorgesehen ist und
Nichtklebebereiche (16) die sich entlang des Trägerbandes (4) erstrecken am oberen and unteren Rand des Trägerbandes (4) vorgesehen sind.

36. Vorrichtung zur Herstellung von Klebeband (14) mit einem Trägerband (4) und Kleber (20), mit.
- einer Fördereinrichtung zum Fördern des Trägerbandes (4)
- einer Aufbringeinrichtung (17) zum Aufbringen von Kleber (20) auf das Trägerband (4),
wobei
die Aufbringeinrichtung (17) vorgesehen ist, den Kleber (20) auf das Trägerband (4) in entlang des Trägerbandes (4) voneinander durch Nichtklebezonen (15) beabstandete Klebezonen (12) intermittierend aufzubringen und
Nichtklebebereiche (16) die sich entlang des Trägerbandes (4) erstrecken am oberen und unteren Rand des Trägerbandes (4) vorgesehen sind.

## Claims

1. A method for sticking at least one pocket (2), in particular a film pocket (2), onto the outside of a container (3), in particular a drinks pouch (3), with the following steps:
- a carrier tape (4) (liner), which covers the adhesive (20) between the pocket tape (1) and the carrier tape (4), is removed from a pocket tape (1), whereby the adhesive (20) remains on the pocket tape (1),
- then at least one pocket (2) is cut off the pocket tape (1) with a cutting process (6), and
- the pocket (2) is stuck to the container (3) with the adhesive (20), wherein
the adhesive (20) between the pocket tape (1) and the carrier tape (4) is provided in adhesive zones (12) spaced from one another along the carrier tape (4) by non-adhesive zones (15),
non-adhesive sections (16) which extend along the carrier tape (4) are provided on the upper and lower edge of the carrier tape (4), and
the cutting process (6) is carried out such that the cut occurs in a non-adhesive zone (15).

2. The method according to Claim 1, **characterised in that** the adhesive zones (12) and the non-adhesive zones (15) are provided in predetermined sections relative to the pockets (2) of the pocket tape (1).

3. The method according to Claim 1 or 2, **characterised in that** a carrier tape (4) of plastic, paper, foil, textile, composite material, metal, rubber, synthetic rubber, V-belt or toothed-belt material or film material is used.

4. The method according to one of the Claims 1 to 3, **characterised in that** a carrier tape (4) is used which, at least on one side, has poor adhesion properties, for example, due to coating or siliconising or is provided with Teflon or an anti-adhesion paint coating or similar.

5. The method according to one of the Claims 1 to 4, **characterised in that** an adhesive with a high initial adhesive force is used, for example a soft adhesive (20), preferably a hot-melt adhesive (20).

6. The method according to one of the Claims 1 to 5, **characterised in that** the cutting process takes place with a blade (5) and /or a knife (5) which moves to and fro and /or rotates.

7. The method according to one of the Claims 1 to 6, **characterised in that** the non-adhesive zones (15) extend laterally with respect to the carrier tape (4).

8. The method according to one of the Claims 1 to 7, **characterised in that** the non-adhesive zones (15) are formed by omitting the adhesive (20), rendering it ineffective or covering it.

9. The method according to one of the Claims 1 to 8, **characterised in that** the cutting process occurs between the pocket contents (11).

10. The method according to one of the Claims 1 to 9, **characterised in that** the pocket (2) is stuck to the container (3) with a number of adhesive zones (12) and/or a number of carrier tapes (4) are used.

11. The method according to one of the Claims 1 to 10, **characterised in that** the pocket tape (1) with the carrier tape (4) and the adhesive (20) is produced immediately before the removal of the carrier tape (4).

12. The method according to Claim 11, **characterised in that** the carrier tape (4) is a closed circulating tape.

13. The method according to one of the Claims 1 to 12, **characterised in that** the pockets (2) of the applied pocket tape (1) enclose a drinking straw (11) and/or an item of cutlery and/or a stirring tool and/or an accessory part and/or a small gift.

14. The method according to one of the Claims 1 to 13, **characterised in that** a pocket tape (1) is used with which the adhesive zones (12) are provided in the direction longitudinal to the pocket tape (1), mainly centrally in relation to the pockets (2).

15. The method according to one of the Claims 1 to 14, **characterised in that** the container (3) is a drinking vessel (3), a container for liquid (3) or a package (3).

16. A pocket tape (1), with adhesive (20) and a carrier tape (4), which covers the adhesive (20), wherein
- adhesive zones (12) are spaced in the direction along the carrier tape by non-adhesive zones (15), and
- non-adhesive sections (16) which extend along the carrier tape (4) are provided at the upper and lower edge of the carrier tape (4).

17. The pocket tape (1) according to Claim 16, **characterised in that** adhesive zones (12) and non-adhesive zones (15) are provided in predetermined sections relative to the pockets (2) of the pocket tape (1).

18. The pocket tape (1) according to Claim 16 or 17, **characterised in that** that carrier tape (4) is produced from plastic, paper, foil, textile or film material.

19. The pocket tape (1) according to one of the Claims 16 to 18, **characterised in that** the carrier tape (4) has poor adhesion properties at least on one side, e.g. is coated, in particular siliconised or coated or provided with Teflon.

20. The pocket tape (1) according to one of the Claims 16 to 19, **characterised in that** the adhesive (20) is an adhesive with a high initial adhesion force, e.g. a soft adhesive (20), preferably a hot-melt adhesive (20).

21. The pocket tape (1) according to one of the Claims 16 to 20, **characterised in that** the non-adhesive zones (15) are provided by omitting the adhesive (20), rendering it ineffective or covering it.

22. The pocket tape (1) according to one of the Claims 16 to 21, **characterised in that** the non-adhesive zones (15) extend laterally to the carrier tape (4).

23. The pocket tape (1) according to one of the Claims 16 to 22, **characterised in that** several carrier tapes (4) are provided.

24. The pocket tape (1) according to one of the Claims 16 to 23, **characterised in that** a drinking straw (11) and/or an item of cutlery and/or a stirring tool and/or an accessory part and/or a small gift is enclosed in the pocket (2).

25. The pocket tape (1) according to one of the Claims 16 to 24, **characterised in that** non-adhesive zones (15) are provided in the direction longitudinal to the pocket tape (1), mainly centrally in relation to the relevant pocket (2).

26. A method for producing a pocket tape (1) with adhesive (20) and a carrier tape (4), which covers the adhesive (20), with the steps:
- the adhesive (20) is applied to the carrier tape (4), and
- the pocket tape (1) is joined to the carrier tape (4), wherein
the adhesive is applied intermittently to the carrier tape (4) in adhesive zones (12) which are spaced by non-adhesive zones (15) in the direction along the carrier tape (4),
non-adhesive sections (16) which extend along the carrier tape (4) are provided on the upper and lower edge of the carrier tape (4), and wherein
the pocket tape (1) is joined to the carrier tape (4) such that the adhesive zones (12) are located in a predetermined position relative to the pockets (2) of the pocket tape (1).

27. A method for the production of a pocket tape (1) with adhesive (20) and a carrier tape (4), which covers the adhesive (20), with the steps:
- the adhesive (20) is applied to the pocket tape (1), and
- the pocket tape (1) is joined to the carrier tape (4), wherein
the adhesive is applied intermittently to the pocket tape (1) in adhesive zones (12) which are spaced by non-adhesive zones (15) in the direction along the pocket tape (1),
non-adhesive sections (16) which extend along the carrier tape (4) are provided on the upper and lower edge of the carrier tape (4), and wherein
the adhesive zones (12) are located in a predetermined position relative to the pockets (2) of the pocket tape (1).

28. The method according to Claim 26 or 27, **characterised in that** a pocket (2) of the pocket tape (1) triggers a signal which controls the application of the adhesive (20) onto the carrier tape (4) and/or the pocket tape.

29. The method according to one of the Claims 26 to 28, **characterised in that** adhesive (20) is applied for predetermined times and/or over zones on the carrier tape (4) and/or pocket tape (1) and/or amounts of adhesive (20).

30. The method according to one of the Claims 26 to 29, **characterised in that** the adhesive zones (12) are applied mainly periodically repetitively on the carrier tape (4) and/or pocket tape (1).

31. The method according to one of the Claims 26 to 30, **characterised in that** the adhesive zones (12) are provided in the direction longitudinal to the pocket tape (1), mainly centrally in relation to the relevant pocket (2).

32. A device for producing a pocket tape (1) with adhesive (20) and a carrier tape (4), which covers the adhesive (20), with:
- a device for supplying a carrier tape (4),
- a device for feeding a pocket tape (1),
wherein the pocket tape (1) and/or the carrier tape (4) can be provided with adhesive (20),
- a device for joining the pocket tape (1) and the carrier tape (4) together so that the adhesive (20) is provided between the pocket tape (1) and the carrier tape (4), wherein
the device includes a control device (21) with which adhesive zones (12), spaced by non-adhesive zones (15) can be applied in the direction along the pocket tape (1) at predetermined sections of the pockets (2) of the pocket tape (1), wherein
non-adhesive sections (16) which extend along the carrier tape (4) are provided on the upper and lower edge of the carrier tape (4).

33. The device according to Claim 32, **characterised in that** a signal transducer (24) is provided which acquires a certain position of a pocket (2) of the pocket tape (1) and can thereupon give a signal to the control device (21).

34. A method for the production of an adhesive tape (14) in which at least one side of a carrier tape (4) is provided with adhesive (20), wherein
the adhesive (20) is intermittently applied to the carrier tape (4) in adhesive zones (12) spaced from one another by non-adhesive zones (15) along the carrier tape (4), and
non-adhesive sections (16) which extend along the carrier tape (4) are provided on the upper and lower edge of the carrier tape (4).

35. An adhesive tape (14) with a carrier tape (4) and an adhesive (20), wherein
the adhesive (20) is provided on the carrier tape (4) in adhesive zones (12) spaced from one another by non-adhesive zones (15) along the carrier tape (4) and
non-adhesive sections (16) which extend along the carrier tape (4) are provided on the upper and lower edge of the carrier tape (4).

36. A device for the production of adhesive tape (14) with a carrier tape (4) and adhesive (20) with:
- a feeding device for feeding the carrier tape (4)
- an application device (17) for applying adhesive (20) to the carrier tape (4),
wherein
the application device (17) is provided to intermittently apply the adhesive (20) to the carrier tape (4) in adhesive zones (12) spaced from one another by non-adhesive zones (15) along the carrier tape (4) and
non-adhesive sections (16) which extend along the carrier tape (4) are provided on the upper and lower edge of the carrier tape (4).

## Revendications

1. Procédé pour coller au moins un sachet (2), en particulier un sachet plastique (2), sur le côté extérieur d'un récipient (3), en particulier d'un sachet pour boissons (3), comprenant les étapes suivantes :
- retrait à partir d'un ruban de sachets (1), d'un ruban de support (4) (liner) recouvrant de la colle (20) entre le ruban de sachets (1) et le ruban de support (4), moyennant quoi la colle (20) reste sur le ruban de sachets (1),
- grâce à un processus de coupe (6), au moins un sachet (2) étant ensuite tranché du ruban de sachets (1), et
- le sachet (2) avec la colle (20) étant collé sur le récipient (3), moyennant quoi
la colle (20) entre le ruban de sachets (1) et le ruban de support (4) étant prévue en zones collantes (12) le long du ruban de support (4) espacées les unes des autres par des zones non collantes (15),
des régions non collantes (16) qui s'étendent le long du ruban de support (4) étant prévues au niveau du bord supérieur et inférieur du ruban de support (4), et
le processus de coupe (6) étant réalisé de manière à ce que la coupe s'effectue dans une zone non collante (15).

2. Procédé selon la revendication 1, **caractérisé en ce que** les zones collantes (12) et les zones non collantes (15) sont prévues dans des zones prédéfinies par rapport aux sachets (2) du ruban de sachets (1).

3. Procédé selon les revendications 1 ou 2, **caractérisé en ce qu'**un ruban de support (4) en matière synthétique, papier, film plastique, tissu, matière composite, métal, caoutchouc, caoutchouc synthétique, en matière de courroie trapézoïdale ou de courroie dentée ou en matière de feuille, est utilisé.

4. Procédé selon l'une quelconque des revendications 1 à 3, **caractérisé en ce que** l'on utiliser un ruban de support (4), lequel est faiblement adhésif au moins sur un côté, en étant par exemple revêtu ou traité à la silicone ou pourvu de téflon ou d'un vernis anti-adhésif ou similaire.

5. Procédé selon l'une quelconque des revendications 1 à 4, **caractérisé en ce que** l'on utilise une colle avec une grande force d'adhésion de départ, par exemple une colle tendre (20), de préférence une colle hot-melt (20).

6. Procédé selon l'une quelconque des revendications 1 à 5, **caractérisé en ce que** le processus de coupe s'effectue avec une lame (5) et/ou un couteau (5), qui se déplace dans le sens aller et retour et/ou qui tourne.

7. Procédé selon l'une quelconque des revendications 1 à 6, **caractérisé en ce que** les zones non collantes (15) s'étendent transversalement au ruban de support (4).

8. Procédé selon l'une quelconque des revendications 1 à 7, **caractérisé en que** les zones non collantes (15) sont réalisées grâce à l'absence, la neutralisation, ou le recouvrement de la colle (20).

9. Procédé selon l'une quelconque des revendications 1 à 8, **caractérisé en ce que** le processus de coupe s'effectue entre les contenus des sachets (11).

10. Procédé selon l'une quelconque des revendications 1 à 9, **caractérisé en ce que** le sachet (2) est collé avec plusieurs zones collantes (12) sur le récipient (3), et/ou **en ce que** plusieurs rubans de support (4) sont utilisés.

11. Procédé selon l'une quelconque des revendications 1 à 10, **caractérisé en ce que** le ruban de sachets (1) avec le ruban de support (4) et la colle (20) est fabriqué juste avant le retrait du ruban de support (4) .

12. Procédé selon la revendication 11, **caractérisé en ce que** le ruban de support (4) est un ruban fermé circulaire.

13. Procédé selon l'une quelconque des revendications 1 à 12, **caractérisé en ce que** les sachets (2) du ruban de sachets (1) utilisé englobent une paille (11) et/ou un élément de couvert et/ou un élément pour remuer et/ou un accessoire et/ou un petit cadeau.

14. Procédé selon l'une quelconque des revendications 1 à 13, **caractérisé en ce qu'**un ruban de sachets (1) est utilisé, pour lequel les zones collantes (12) sont prévues en direction le long du ruban de sachets (1), essentiellement au milieu par rapport aux sachets (2).

15. Procédé selon l'une quelconque des revendications 1 à 14, **caractérisé en ce que** le récipient (3) est un récipient à boisson (3), un conteneur à liquides (3) ou un emballage (3).

16. Ruban de sachets (1) avec de la colle (20) et un ruban de support (4) recouvrant la colle (20),
des zones collantes (12) en direction le long du ruban de support étant espacées grâce à des zones non collantes (15), et
de régions non collantes (16) qui s'étendent le long du ruban de support (4) étant prévues au niveau du bord supérieur et inférieur du ruban de support (4).

17. Ruban de support (1) selon la revendication 16, **caractérisé en ce que** des zones collantes (12) et des zones non collantes (15) sont prévues au niveau de zones prédéfinies par rapport aux sachets (2) du ruban de sachets (1).

18. Ruban de sachets (1) selon les revendications 16 ou 17, **caractérisé en ce que** le ruban de support (4) est fabriqué en matière synthétique, papier, film plastique, tissu, ou en une matière de feuille.

19. Ruban de sachets (1) selon l'une quelconque des revendications 16 à 18, **caractérisé en ce que** le ruban de support (4) est faiblement adhésif au moins d'un côté, par exemple en étant revêtu, en particulier traité à la silicone, ou revêtu ou pourvu de téflon.

20. Ruban de sachets (1) selon l'une quelconque des revendications 16 à 19, **caractérisé en ce que** la colle (20) est une colle avec une grande force d'adhésion de départ, par exemple une colle tendre (20), de préférence une colle hot-melt (20).

21. Ruban de sachets (1) selon l'une quelconque des revendications 16 à 20, **caractérisé en ce que** des zones non collantes (15) sont prévues grâce à l'absence ou à la neutralisation ou au recouvrement de la colle (20) .

22. Ruban de sachets (1) selon l'une quelconque des revendications 16 à 21, **caractérisé en ce que** les zones non collantes (15) s'étendent transversalement au ruban de support (4).

23. Ruban de sachets (1) selon l'une quelconque des revendications 16 à 22, **caractérisé en ce que** plusieurs rubans de support (4) sont prévus.

24. Ruban de sachets (1) selon l'une quelconque des revendications 16 à 23, **caractérisé en ce que** le sachet (2) contient une paille (11) et/ou un élément de couvert et/ou un élément pour remuer et/ou un accessoire et/ou un petit présent.

25. Ruban de sachets (1) selon l'une quelconque des revendications 16 à 24, **caractérisé en ce que** des zones non collantes (15) en direction le long du ruban de sachets (1) sont essentiellement prévues au milieu par rapport au sachet (2) respectif.

26. Procédé pour la fabrication d'un ruban de sachets (1) avec de la colle (20) et un ruban de support (4) qui recouvre la colle (20), comprenant les étapes suivantes :
- application de la colle (20) sur le ruban de support (4), et
- liaison entre le ruban de sachets (1) et le ruban de support (4), moyennant quoi la colle est appliquée par intermittence sur le ruban de support (4) au niveau de zones collantes (12) lesquelles sont espacées par des zones non collantes (15) en direction le long du ruban de support (4),
- des régions non collantes (16) qui s'étendent le long du ruban de support (4) étant prévues au niveau du bord supérieur et inférieur du ruban de support (4), et moyennant quoi
le ruban de sachets (1) est relié au ruban de support (4) de manière à ce que les zones collantes (12) se trouvent dans une position prédéfinie par rapport aux sachets (2) du ruban de sachets (1).

27. Procédé pour la fabrication d'un ruban de sachets (1) avec de la colle (20) et un ruban de support (4) recouvrant la colle (20), comprenant les étapes suivantes :
- application de la colle (20) sur le ruban de sachets (1), et
- liaison entre le ruban de sachets (1) et le ruban de support (4), moyennant quoi
la colle est appliquée par intermittence sur le ruban de sachets (1) au niveau de zones collantes (12) lesquelles sont espacées par des zones non collantes (15) en direction le long du ruban de sachets (1),
- des régions non collantes (16) qui s'étendent le long du ruban de support (4) étant prévues au niveau du bord supérieur et inférieur du ruban de support (4), et
les zones collantes (12) se trouvant dans une position prédéfinie par rapport aux sachets (2) du ruban de sachets (1).

28. Procédé selon les revendications 26 ou 27, **caractérisé en ce qu'**un sachet (2) du ruban de sachets (1) déclenche un signal qui commande l'application de la colle (20) sur le ruban de support (4) et/ou commande le ruban de sachets.

29. Procédé selon l'une quelconque des revendications 26 à 28, **caractérisé en ce que** de la colle (20)est appliquée à des moments prédéfinis et/ou sur des zones prédéfinies sur le ruban de support (4) et/ou le ruban de sachets (1) et/ou en quantités de colle (20) prédéfinies.

30. Procédé selon l'une quelconque des revendications 26 à 29, **caractérisé en que** les zones collantes (12) sont appliquées essentiellement de manière répétée périodiquement sur le ruban de support (4) et/ou le ruban de sachets (1).

31. Procédé selon l'une quelconque des revendications 26 à 30, **caractérisé en ce que** les zones collantes (12) en direction longitudinale par rapport au ruban de sachets (1) sont prévues essentiellement au milieu par rapport au sachet (2) respectif.

32. Dispositif pour la fabrication d'un ruban de sachets (1) avec de la colle (20) et un ruban de support (4) recouvrant la colle (20), comprenant
- un dispositif pour délivrer un ruban de support (4),
- un dispositif pour acheminer un ruban de sachets (1),
le ruban de sachets (1) et/ou le ruban de support (4) pouvant être munis de colle (20),
- un dispositif pour réunir le ruban de sachets (1) et le ruban de support (4) de manière à ce que la colle (20) soit prévue entre le ruban de sachets (1) et le ruban de support (4), moyennant quoi
le dispositif comprend un dispositif de commande (21) avec lequel il est possible d'appliquer, en direction le long du ruban de sachets (1), des zones collantes (12) espacées par des zones non collantes (15) au niveau de zones prédéfinies des sachets (2) du ruban de sachets (1), moyennant quoi
des régions non collantes (16) qui s'étendent le long du ruban de support (4) sont prévues au niveau du bord supérieur et inférieur du ruban de support (4).

33. Dispositif selon la revendication 32, **caractérisé en qu'**un poste transmetteur de signaux (24) est prévu, lequel peut déterminer une position définie d'un sachet (2) du ruban de sachets (1) et peut ensuite émettre un signal à l'attention du dispositif de commande (21).

34. Procédé pour la fabrication d'un ruban adhésif (14), pour lequel de la colle (20) est prévue au moins sur un côté d'un ruban de support (4),
la colle (20) étant appliquée par intermittence sur le ruban de support (4) en zones collantes (12) espacées les unes des autres grâce à des zones non collantes (15) le long du ruban de support (4), et
des régions non collantes (16) qui s'étendent le long du ruban de support (4) étant prévues au niveau du bord supérieur et inférieur du ruban de support (4).

35. Ruban adhésif (14) avec un ruban de support (4) et une colle (20),
la colle (20) étant prévue sur le ruban de support (4) en zones collantes (12) espacées les unes des autres grâce à des zones non collantes (15) le long du ruban de support (4), et
des régions non collantes (16) qui s'étendent le long du ruban de support (4) étant prévues au niveau du bord supérieur et inférieur du ruban de support (4).

36. Dispositif pour la fabrication d'un ruban adhésif (14) avec un ruban de support (4) et de la colle (20), comprenant
- un dispositif d'acheminement pour acheminer le ruban de support (4)
- un dispositif d'application (17) pour appliquer de la colle (20) sur le ruban de support (4),
le dispositif d'application (17) étant prévu pour appliquer la colle (20) par intermittence sur le ruban de support (4) en zones collantes (12) espacées les unes des autres grâce à des zones non collantes (15) le long du ruban de support (4), et
des régions non collantes (16) qui s'étendent le long du ruban de support (4) étant prévues au niveau du bord supérieur et inférieur du ruban de support (4).
